# EUROPEAN PATENT SPECIFICATION

(11) **EP 4 343 930 B1**
(45) Date of publication and mention of the grant of the patent: **27.08.2025**
(21) Application number: 22832926.4
(22) Date of filing: 21.06.2022
(51) Int. Cl.: H01M 12/08, H01M 50/107

(54) **METAL-AIR BATTERY SYSTEM**
METALL-LUFT-BATTERIESYSTEM
SYSTÈME DE BATTERIE MÉTAL-AIR

(30) Priority: 02.07.2021 JP 2021110540
(43) Date of publication of application: 27.03.2024
(73) Proprietor: Mitsubishi Heavy Industries, Ltd., Tokyo 100-8332 (JP); Chulalongkorn University, Pathumwan, Bangkok 10330 (TH)
(72) Inventor: KIYABU, Toshiyasu, Tokyo 100-8332 (JP); NOGUCHI, Yoshinori, Tokyo 100-8332 (JP); KHEAWHOM, Soorathep, Pathumwan, Bangkok, 10330 (TH)
(74) Representative: Studio Torta S.p.A.
(86) International application number: PCT/JP2022/024690
(87) International publication number: WO 2023/276778

(56) References cited:
- WO-A1-2011/152464
- WO-A1-2011/152464
- WO-A1-2021/111495
- JP-A- 2016 081 572
- JP-A- 2017 016 902
- JP-A- 2017 107 692
- JP-U- S4 725 917

## Description

### TECHNICAL FIELD

The present disclosure relates to a metal-air battery system.

This application claims the priority of Japanese Patent Application No. 2021-110540 filed on July 2, 2021.

### BACKGROUND

A metal-air battery system is known which uses metal as a negative electrode active material and oxygen (air) as a positive electrode active material. Patent Document 1 describes a cylindrical three-electrode metal-air battery system in which a cylindrical fuel electrode, auxiliary electrode, and air electrode immersed in an electrolyte solution are concentrically arranged. This metal-air battery system can be used as a secondary battery in which the fuel electrode and the auxiliary electrode are used to charge and the fuel electrode and the air electrode are used to discharge, and can be used as a fuel cell in which zinc pellets are introduced to the auxiliary electrode having a holding structure and the auxiliary electrode and the air electrode are used to generate electricity.

### Citation List

### Patent Literature

Patent Document 1: JP2015-170400A
Patent Document 2: WO2011152464
Patent Document 3 : WO2021111495

### SUMMARY

### Technical Problem

If electricity needs to be stored in the metal-air battery system, the electrolyte solution is stored in a tank, and the electrolyte solution is supplied in circulation by a pump. However, in the metal-air battery system of Patent Document 1, the electrolyte solution is not configured to be supplied in circulation, and if the electrolyte solution is configured to be supplied in circulation, the zinc pellets introduced to the auxiliary electrode may flow away along with the electrolyte solution. Therefore, it is not envisaged that the metal-air battery system of Patent Document 1 would be modified such that the electrolyte solution is supplied in circulation, and further such modification cannot be made easily.

In view of the above, an object of at least one embodiment of the present disclosure is to provide a metal-air battery system that can store electricity, and charge and discharge efficiently.

### Solution to Problem

In order to achieve the above-described object, a metal-air battery system according to the present disclosure is a metal-air battery system that includes a cell including: a chamber; and an electrode device housed in the chamber. The electrode device includes: a first electrode; a tubular second electrode disposed so as to surround the first electrode on a radially outer side of the first electrode; and a tubular third electrode disposed so as to surround the second electrode on a radially outer side of the second electrode, and is configured such that an electrolyte solution flows at least between an outer peripheral surface of the first electrode and an inner peripheral surface of the third electrode. A combination of the first electrode, the second electrode, and the third electrode is a combination of a negative electrode containing metal, a charging positive electrode, and a discharging positive electrode.

### Advantageous Effects

According to the metal-air battery system of the present disclosure, since a difference in electrode area between the inner side and the outer side can be obtained by arranging electrodes such that their cross sections are concentric, it is possible to reduce a current density during operation of the electrodes arranged on the outer side compared to that of the central electrode. The resistance of the system can be reduced by utilizing this effect to arrange, on the outer side, the electrodes requiring a reduction in resistance loss, making it possible to efficiently charge/discharge. Further, since the electrolyte solution is supplied in circulation to the cell, electricity can be stored.

### BRIEF DESCRIPTION OF DRAWINGS

FIG. 1 is a schematic configuration diagram of a metal-air battery system according to Embodiment 1 of the present disclosure.
FIG. 2 is a schematic configuration diagram showing a modified example of the metal-air battery system according to Embodiment 1 of the present disclosure.
FIG. 3 is a cross-sectional schematic diagram showing the configuration of a three-electrode cell of the metal-air battery system according to Embodiment 1 of the present disclosure.
FIG. 4 is a cross-sectional schematic diagram showing the configuration of the three-electrode cell of the metal-air battery system according to Embodiment 2 of the present disclosure.
FIG. 5 is a cross-sectional schematic diagram showing the configuration of the three-electrode cell of the metal-air battery system according to Embodiment 3 of the present disclosure.
FIG. 6 is a cross-sectional schematic diagram showing the configuration of the three-electrode cell of a modified example of the metal-air battery system according to Embodiment 3 of the present disclosure.
FIG. 7 is a schematic configuration diagram showing part of another modified example of the metal-air battery system according to Embodiment 3 of the present disclosure.
FIG. 8 is a cross-sectional schematic diagram showing the configuration of the three-electrode cell of the metal-air battery system according to Embodiment 4 of the present disclosure.
FIG. 9 is a cross-sectional schematic diagram showing the configuration of the three-electrode cell of a modified example of the metal-air battery system according to Embodiment 4 of the present disclosure.
FIG. 10 is a cross-sectional schematic diagram showing the configuration of the three-electrode cell of the metal-air battery system according to Embodiment 5 of the present disclosure.
FIG. 11 is a cross-sectional schematic diagram showing the configuration of the three-electrode cell of the metal-air battery system according to Embodiment 6 of the present disclosure.

### DETAILED DESCRIPTION

Hereinafter, a metal-air battery system according to embodiments of the present disclosure will be described with reference to the drawings. The embodiment to be described below indicates one aspect of the present disclosure, does not intend to limit the disclosure, and can optionally be modified within a range of a technical idea of the present disclosure.

### (Embodiment 1)

### <Configuration of metal-air battery system according to Embodiment 1 of present disclosure>

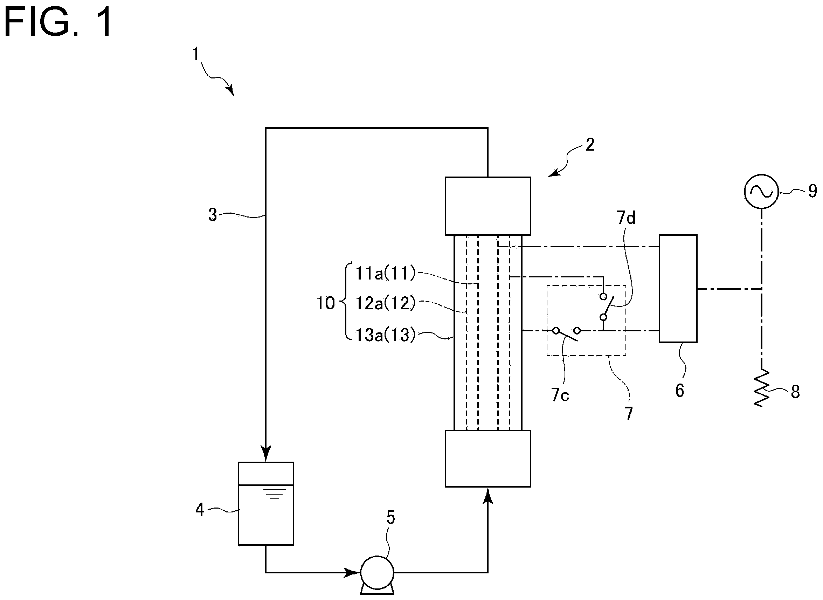

As shown in FIG. 1, a metal-air battery system 1 according to Embodiment 1 of the present disclosure includes a cylindrical three-electrode cell 2. Both ends of a circulation line 3 for an electrolyte solution are connected to the cell 2 in order to flow the electrolyte solution inside the cell 2. The circulation line 3 includes an electrolytic tank 4 for storing the electrolyte solution, and a pump 5.

As the electrolyte solution, it is possible to use either an aqueous electrolyte solution in which an electrolyte is dissolved in water or a non-aqueous electrolyte in which an electrolyte is dissolved in a non-aqueous solution such as an organic solvent. As the aqueous electrolyte solution, it is possible to use, for example, an aqueous solution in which a hydroxide such as potassium, sodium, lithium, barium, or magnesium, a chloride, a phosphate, a borate, a sulfate, etc. is used as an electrolyte. That is, any indicator salt for imparting electrical conductivity of the aqueous solution can be used as the electrolyte. As the non-aqueous electrolyte solution, it is possible to use, for example, a solution obtained by dissolving an indicator salt containing an alkali metal etc. in a liquid such as a cyclic or chain carbonate, a cyclic or chain ester, a cyclic or chain ether, a sulfone compound, an ionic liquid, etc.

The cell 2 includes an electrode device 10 that has a shape extending in the axial direction, and includes a first electrode 11, a tubular second electrode 12 disposed so as to surround the first electrode 11 on a radially outer side of the first electrode 11, and a tubular third electrode 13 disposed so as to surround the second electrode12 on a radially outer side of the second electrode. Herein, "surround" means a configuration in which at least a part of the first electrode 11 in a length direction and at least a part of the second electrode 12 in a length direction are housed inside the second electrode 12 and the third electrode 13, respectively. That is, the first electrode 11, the second electrode 12, and the third electrode 13 are disposed such that their cross sections perpendicular to the axial direction have a concentric shape (a concentric circular shape if these electrodes are cylindrical). In Embodiment 1, the first electrode 11 is a negative electrode 11a, the second electrode 12 is a charging positive electrode 12a used together with the negative electrode 11a during charging of the metal-air battery system 1, and the third electrode 13 is a discharging positive electrode 13a used together with the negative electrode 11a during discharging of the metal-air battery system 1.

The negative electrode 11a may be a tubular electrode made of metal such as zinc, or may be an electrode in which a surface of a tubular body made of other metal such as stainless steel or aluminum is plated with zinc. In the latter case, it is only necessary that at least an outer surface, of the surface of the negative electrode 11a, facing the charging positive electrode 12a is plated with zinc. The metal contained in the negative electrode 11a is not limited to zinc. Iron, aluminum, lithium, sodium, potassium, copper, magnesium, etc., or alloys thereof can be used depending on the type of electrolyte solution (for example, a difference in aqueous electrolyte solution/non-aqueous electrolyte solution). A tubular electrode made of a nonoxidizing porous metal material such as nickel, nickel alloy, or stainless steel in a mesh shape can be used as the charging positive electrode 12a.

As the discharging positive electrode 13a, it is possible to use, for example, an electrode having a three-layer structure including a porous outermost layer in which oxygen can diffuse, a porous intermediate layer formed of metal such as nickel, and an innermost layer in which an oxygen reduction catalyst is supported on a conductive material such as carbon. As the oxygen reduction catalyst, a catalyst mainly containing platinum as an active component (for example, platinum-supported carbon) can be used under an acidic liquid environment. Also, under an alkaline liquid environment, a catalyst can be used, which contains 3d transition metal such as iron, manganese, nickel, or cobalt, or its oxide as an active component. In addition, a catalyst containing ruthenium, silver, gold, or iridium as an active component can also be used under both the acidic liquid environment and the alkaline liquid environment. Further, a catalyst can also be used, which contains an organometallic complex, a carbon fiber (for example, a carbon nanotube), a nitrogen carbide, etc. as an active component. Moreover, according to this configuration, since electrode areas of the charging positive electrode 12a and the discharging positive electrode 13a can be greater than that of the negative electrode 11a, a current density during charging/discharging can be lower than that of the negative electrode 11a. Whereby, it is possible to expect an effect of being able to relatively reduce a loss due to resistance of the charging positive electrode 12a and the discharging positive electrode 13a.

The metal-air battery system 1 can further include a switching device 7. The negative electrode 11a is electrically connected to an AC/DC converter 6, and the charging positive electrode 12a and the discharging positive electrode 13a are connected to the AC/DC converter 6 via the switching device 7 which is switchable such that either one of the charging positive electrode 12a or the discharging positive electrode 13a energizes the AC/DC converter 6, that is, the negative electrode 11a is electrically connected to either one of the charging positive electrode 12a or the discharging positive electrode 13a. The AC/DC converter 6 can electrically be connected to a load 8 and an AC power source 9. The AC/DC converter 6 is not required if a DC power source is used in place of the AC power source 9 and the load 8 operates on DC current.

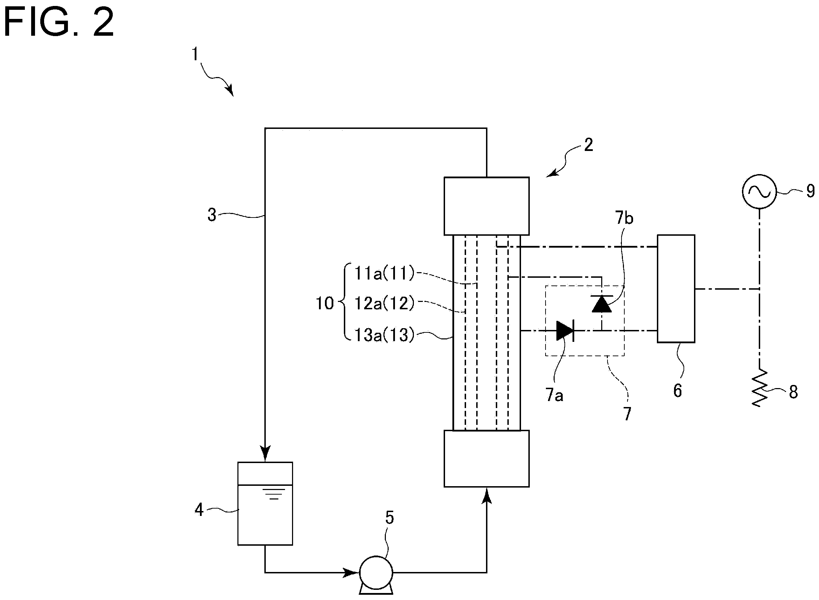

Although the configuration of the switching device 7 is not particularly limited, for example, the switching device 7 may be composed of a first switch 7c for electrically opening and closing between the discharging positive electrode 13a and the negative electrode 11a, and a second switch 7d for electrically opening and closing between the negative electrode 11a and the charging positive electrode 12a (hereinafter, referred to as the "switch-type switching device 7"). The first switch 7c and the second switch 7d are not limited to mechanical switches, and may be semiconductor switches. Further, as shown in FIG. 2, the switching device 7 may be composed of a first diode 7a for flowing a current in a direction from the discharging positive electrode 13a to the negative electrode 11a, and a second diode 7b for flowing a current in a direction from the negative electrode 11a to the charging positive electrode 12a (hereinafter, referred to as the "diode-type switching device 7"). The diode-type switching device 7 is superior in terms of durability and cost compared to the switch-type switching device 7 composed of the mechanical switches, and is superior in terms of cost compared to the switch-type switching device 7 composed of the semiconductor switches. Since the charging positive electrode 12a does not undergo a discharge reaction in a state where the charging positive electrode 12a is immersed in the electrolyte solution, the second diode 7b may not be provided (the switching device 7 is composed only of the first diode 7a). Also, the first diode 7a may not be provided, either (that is, a configuration in which the switching device 7 is not provided) if it is not necessary to consider the reaction at the discharging positive electrode 13a during charging.

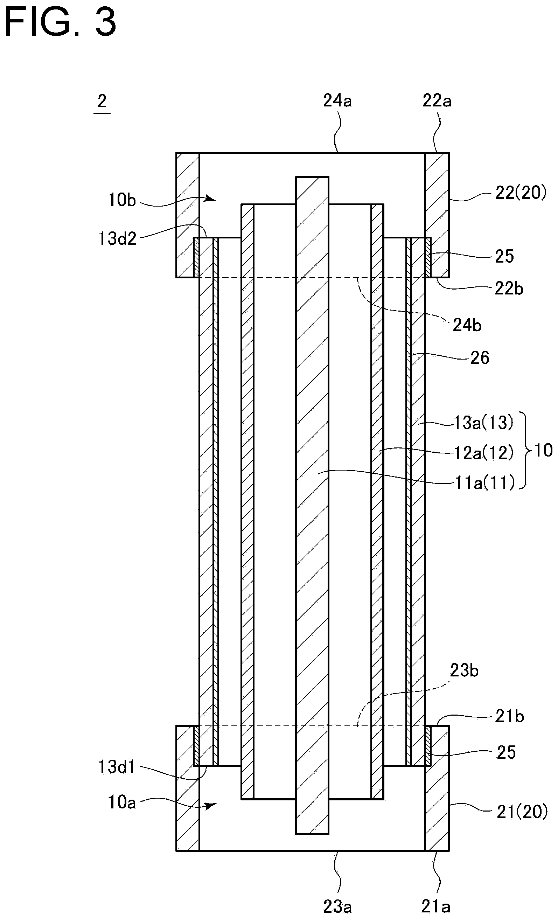

As shown in FIG. 3, the cell 2 includes a chamber 20 for housing the electrode device 10. The chamber 20 includes a first chamber section 21 provided so as to internally house at least one end portion 13d1 of the third electrode 13 on a side of a first end portion 10a which is one end portion of the electrode device 10, and a second chamber section 22 provided so as to internally house at least another end portion 13d2 of the third electrode 13 on a side of a second end portion 10b which is another end portion of the electrode device 10.

The first chamber section 21 has a first end face 21a and a second end face 21b located away from each other in the axial direction of the cell 2, and the first end face 21a and the second end face 21b are respectively formed with a first opening 23a and a second opening 23b. The second chamber section 22 has a third end face 22a and a fourth end face 22b located away from each other in the axial direction of the cell 2, and the third end face 22a and the fourth end face 22b are respectively formed with a third opening 24a and a fourth opening 24b.

The first electrode 11, the second electrode 12, and the third electrode 13 are respectively inserted into the second opening 23b and the fourth opening 24b, and a seal member 25 for sealing between an outer peripheral surface of the third electrode 13 and respective inner peripheral surfaces of the first chamber section 21 and the second chamber section 22 is disposed therebetween. The seal member 25 can suppress leakage of the electrolyte solution from the chamber 20 between the first opening 23a and the third opening 24a. The seal member 25 may be an adhesive agent, a heat-shrinkable tube, a heat seal, a resin weld, or the like.

The inner peripheral surface of the discharging positive electrode 13a, that is, the surface facing the negative electrode 11a is provided with a separation membrane 26. As the separation membrane 26, it is possible to use, for example, an anion exchange membrane, or a microporous membrane formed from polymer, solid oxide, or the like. Although the configuration of the anion exchange membrane is not particularly limited, it is preferable to use a high-performance membrane with high ion conductivity and strength. Also, the configuration of the microporous membrane is not particularly limited, either and commercially available membranes for various purposes can be used. Although it is preferable to use a microporous membrane suitable for an aqueous solution system if the aqueous electrolyte solution is used, any resin-made microporous membrane can be used as long as hydrophilic treatment is applied to a surface, for example, modifying the surface with a hydrophilic group, adding a surfactant to the surface, or combining the surface with oxide particles.

### <Operation of metal-air battery system according to Embodiment 1 of present disclosure>

Next, the operation of the metal-air battery system 1 will be described with reference to FIGs. 1 to 3. First, the operation in which current flows through the load 8 due to the discharge of the metal-air battery system 1 will be described. The pump 5 is started in a state where the switching device 7 is operated to electrically connect the negative electrode 11a to the discharging positive electrode 13a, and the electrolyte solution is supplied from the electrolytic tank 4 to the cell 2 via the circulation line 3. The electrolyte solution circulates through the circulation line 3 by returning to the electrolytic tank 4 via the circulation line 3 after passing through the cell 2.

In the cell 2, the electrolyte solution having flowed into the first chamber section 21 via the first opening 23a flows into, via the first end portion 10a of the electrode device 10, flow paths formed between the outer peripheral surface of the negative electrode 11a and the inner peripheral surface of the discharging positive electrode 13a, that is, a flow path formed between the outer peripheral surface of the negative electrode 11a and the inner peripheral surface of the charging positive electrode 12a and a flow path formed between the outer peripheral surface of the charging positive electrode 12a and the inner peripheral surface of the discharging positive electrode 13a, and flows through these flow paths. The electrolyte solution having flowed through these flow paths flows out from these flow paths to the second chamber section 22 via the second end portion 10b of the electrode device 10, and flows out from the second chamber section 22 via the third opening 24a.

While the electrolyte solution thus flows in the cell 2, the following reaction occurs in the negative electrode 11a and the discharging positive electrode 13a. In the negative electrode 11a, metal contained in the negative electrode 11a, such as zinc, reacts with hydroxide ions in the electrolyte solution to generate zincate ions, and electrons are emitted to the negative electrode 11a and flow to the discharging positive electrode 13a. In the discharging positive electrode 13a, oxygen contained in air outside the cell 2 diffuses through the outermost layer and the intermediate layer, and hydroxide ions are produced by reactions between the air, water in the electrolyte solution, and the electrons flowing to the discharging positive electrode 13a due to the oxygen reduction catalyst in the innermost layer. The produced hydroxide ions are used in the above-described reaction at the negative electrode 11a.

If the anion exchange membrane which is the separation membrane 26 is provided on the inner peripheral surface of the discharging positive electrode 13a, that is, the innermost layer (a layer where the oxygen reduction catalyst is supported on the conductive material) of the discharging positive electrode 13a, oxygen molecules react at a reaction interface (threephase interface) where the oxygen reduction catalyst/conductive material/ionic conductor contact, producing hydroxide ions. The produced hydroxide ions move into the electrolyte solution through the ionic conductor. Whereby, the reaction interface by ionomer contact with the oxygen reduction catalyst is extended and the resistance is reduced. In addition, if the separation membrane 26 is provided on the inner peripheral surface of the discharging positive electrode 13a, it is possible to suppress leakage of the electrolyte solution to the outside of the cell 2 via the discharging positive electrode 13a or clogging of the intermediate layer and the outermost layer of the discharging positive electrode 13a. Further, precipitation of carbonate from the electrolyte solution and clogging of the intermediate layer and the outermost layer of the discharging positive electrode 13a can be suppressed by suppressing mixing of carbon dioxide contained in the air into the electrolyte solution. Therefore, it is possible to reduce an overvoltage loss of the reaction in the discharging positive electrode 13a, and it is possible to suppress alteration, deterioration, or leakage of the electrolyte solution.

As electrons flow from the negative electrode 11a to the discharging positive electrode 13a by such operation, DC current flows from the discharging positive electrode 13a to the negative electrode 11a. The AC/DC converter 6 converts this DC current into AC current and supplies AC current to the load 8.

Next, the charging operation of the metal-air battery system 1 will be described. The electrolyte solution is circulated in a state where the switching device 7 is operated to electrically connect the negative electrode 11a to the charging positive electrode 12a. The AC current from the AC power source 9 is converted into DC current by the AC/DC converter 6, and the DC current flows to the charging positive electrode 12a. That is, electrons flow to the negative electrode 11a. At the negative electrode 11a, zinc ions in the electrolyte solution receive electrons, thereby depositing zinc on the negative electrode 11a, and the metal-air battery system 1 is charged.

No problem occurs if zinc is uniformly deposited on the surface of the negative electrode 11a during such charging, but in reality, a dendrite partially extending like needles may be generated. If the dendrite is generated and grows, the dendrite may connect the negative electrode 11a and the charging positive electrode 12a. Then, an internal short circuit occurs and the voltage of the battery becomes 0 V, making it impossible to charge the battery.

In the event that such internal short circuit occurs, if the switching device 7 is provided, the negative electrode 11a is electrically connected to the discharging positive electrode 13a by closing the first switch 7c and opening the second switch 7d, thereby switching from the charging state to the discharging state. Even if the negative electrode 11a and the charging positive electrode 12a are internally short-circuited by the dendrite, the negative electrode 11a and the charging positive electrode 12a are electrically separated, allowing for discharge using the negative electrode 11a and the discharging positive electrode 13a. During discharging, zinc is eluted as zinc ions from the negative electrode 11a into the electrolyte solution, eliminating the internal short circuit.

Since the difference in electrode area between the inner side and the outer side can be obtained by arranging the negative electrode 11a, the charging positive electrode 12a, and the discharging positive electrode 13a such that their cross sections are concentric, it is possible to reduce the current density during operation of the charging positive electrode 12a and the discharging positive electrode 13a arranged on the outer side compared to that of the central negative electrode 11a. The resistance of the system can be reduced by utilizing this effect to arrange the charging positive electrode 12a and the discharging positive electrode 13a, which require a reduction in resistance loss, on the outer side, making it possible to efficiently charge/discharge. Further, since the electrolyte solution is supplied in circulation to the cell, electricity can be stored.

In addition, since the switch-type switching device 7 is provided, the negative electrode 11a and the charging positive electrode 12a are used to charge and the negative electrode 11a and the discharging positive electrode 13a are used to discharge, making it possible to discharge even if internal short circuit occurs during charging. Whereby, it is possible to charge/discharge without any trouble. Further, since the electrolyte solution is supplied in circulation to the cell 2, electricity can be stored. On the other hand, since either the switch-type or diode-type switching device 7 is provided, it is possible to reduce the risk of opposite reactions occurring at the positive electrode during charging and discharging, and improvements in efficiency and lifetime can be expected.

### <Modified example of metal-air battery system according to Embodiment 1 of present disclosure>

In Embodiment 1, although the negative electrode 11a does not have a tubular shape, the negative electrode 11a may also have the tubular shape just like the charging positive electrode 12a and the discharging positive electrode 13a. In this case, since the electrolyte solution also flows into the negative electrode 11a, the configuration is preferable in which the inner peripheral surface of the negative electrode 11a also contains zinc.

### (Embodiment 2)

Next, the metal-air battery system according to Embodiment 2 will be described. The metal-air battery system according to Embodiment 2 is obtained by modifying the configuration of the electrode device 10 with respect to Embodiment 1. In Embodiment 2, the same constituent elements as those in Embodiment 1 are associated with the same reference signs and not described again in detail.

### <Configuration of metal-air battery system according to Embodiment 2 of present disclosure>

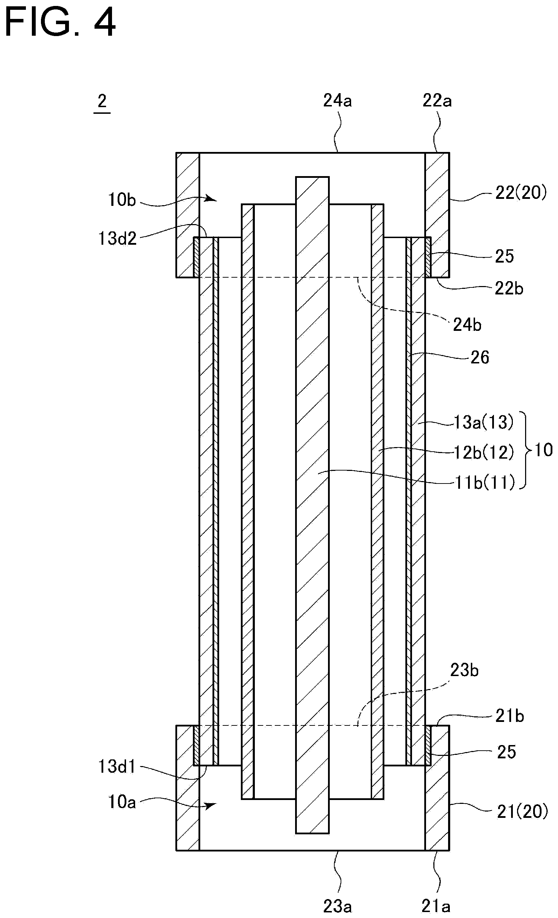

As shown in FIG. 4, in Embodiment 2 of the present disclosure, the cell 2 includes the electrode device 10 with a charging positive electrode 11b as the first electrode 11, a negative electrode 12b as the second electrode 12, and the discharging positive electrode 13a as the third electrode 13. The negative electrode 12b has a tubular shape, and the negative electrode 12b is configured to contain zinc not only on its outer peripheral surface but also on its inner peripheral surface. Further, as in Embodiment 1, an electrode having a tubular shape manufactured in a mesh shape may be used as the charging positive electrode 11b. In Embodiment 2, however, the charging positive electrode 11b will be described as an electrode having a non-mesh non-tubular shape, that is, a bar shape. Other configurations are the same as those in Embodiment 1.

### <Operation of metal-air battery system according to Embodiment 2 of present disclosure>

The operation in Embodiment 2 is the same as that in Embodiment 1. That is, in the metal-air battery system 1 according to Embodiment 2 as well, the negative electrode 12b and the charging positive electrode 11b are used to charge and the negative electrode 12b and the discharging positive electrode 13a are used to discharge, making it possible to discharge even if internal short circuit occurs during charging. In Embodiment 2 as well, since the charging positive electrode 11b, the negative electrode 12b, and the discharging positive electrode 13a are disposed such that their cross sections are concentric, the same technical effect as in Embodiment 1 can be obtained.

In Embodiment 2, a measuring instrument is provided to measure a potential difference between the negative electrode 12b and the discharging positive electrode 13a, and this potential difference is monitored during charging, making it possible to detect that internal short circuit has occurred between the negative electrode 12b and the discharging positive electrode 13a. If the internal short circuit between the negative electrode 12b and the discharging positive electrode 13a is detected, the internal short circuit can be eliminated by discharging using the negative electrode 12b and the charging positive electrode 11b.

### (Embodiment 3)

Next, the metal-air battery system according to Embodiment 3 will be described. The metal-air battery system according to Embodiment 3 is obtained by modifying the configuration of the electrode device 10 with respect to Embodiment 1. In Embodiment 3, the same constituent elements as those in Embodiment 1 are associated with the same reference signs and not described again in detail.

### <Configuration of metal-air battery system according to Embodiment 3 of present disclosure>

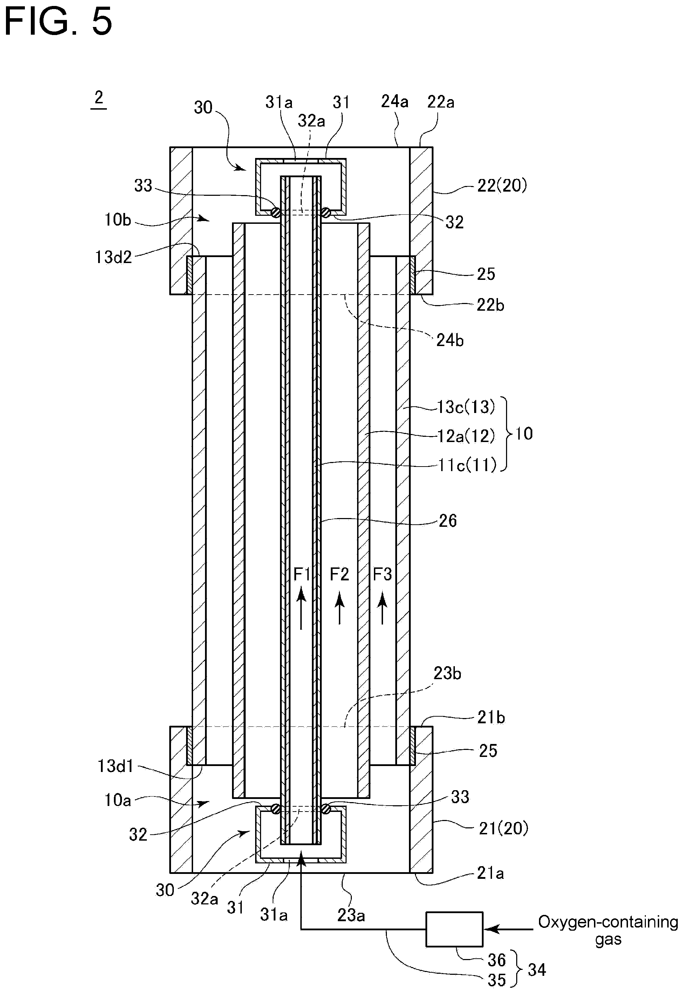

As shown in FIG. 5, in Embodiment 3 of the present disclosure, the cell 2 includes the electrode device 10 with a discharging positive electrode 11c as the first electrode 11, the charging positive electrode 12a as the second electrode 12, and a negative electrode 13c as the third electrode 13. All of the discharging positive electrode 11c, the charging positive electrode 12a, and the negative electrode 13c have a tubular shape. An outer peripheral surface of the discharging positive electrode 11c, that is, a surface facing the negative electrode 13c is provided with the separation membrane 26. However, in Embodiment 3 (the same also applies to Embodiment 4 described later), a three-layer structure of the discharging positive electrode 11c is different from that of the discharging positive electrode 13a (see FIG. 2) of Embodiments 1 and 2, and the layer where the oxygen reduction catalyst is supported on the conductive material such as carbon is the outermost layer on the outer peripheral surface side and the porous layer in which oxygen can diffuse is the innermost layer on the inner peripheral surface side.

Each of the first chamber section 21 and the second chamber section 22 is internally provided with a separation member 30 for separating the flow of the electrolyte solution in the chamber 20 into a first flow F1 flowing inside the discharging positive electrode 11c and a second flow F2 flowing outside the discharging positive electrode 11c. The separation member 30 has a tubular shape in which end faces 31, 32 are disposed at both ends in the axial direction of the cell 2 when disposed inside the first chamber section 21 and the second chamber section 22, and openings 31a, 32a are respectively formed in the end faces 31, 32. The discharging positive electrode 11c is inserted into the one opening 32a, and a seal member 33 such as an O-ring is disposed between an inner peripheral edge of the opening 31b and an outer peripheral surface of the discharging positive electrode 11c. The other opening 31a faces the first opening 23a or the third opening 24a.

An oxygen-containing gas supply device 34 is provided to supply an oxygen-containing gas such as air to the electrolyte solution of the first flow F1 inside the separation member 30 disposed in, among the first chamber section 21 and the second chamber section 22, the first chamber section 21 located upstream in the flow direction of the electrolyte solution flowing in the cell 2. As the oxygen-containing gas supply device 34, it is possible to use, for example, a bubbling device that includes an oxygen-containing gas supply line 35 having one end located inside the separation member 30 and another end opening to the outside of the cell 2 or connected to an oxygen-containing gas cylinder or the like, and a compressor 36 disposed on the oxygen-containing gas supply line 35. Other configurations are the same as those in Embodiment 1.

### <Operation of metal-air battery system according to Embodiment 3 of present disclosure>

Next, the operation of the metal-air battery system 1 according to Embodiment 3 will be described, focusing on differences from the operation of the metal-air battery system 1 according to Embodiment 1. When the metal-air battery system 1 is discharged, in the cell 2, the electrolyte solution having flowed into the first chamber section 21 via the first opening 23a is divided into the first flow F1 which is a flow of the electrolyte solution entering the inside of the separation member 30 via the opening 31a and the second flow F2 which is a flow of the electrolyte solution outside the separation member 30.

The oxygen-containing gas pressurized by the compressor 36 is supplied into the separation member 30 via the oxygen-containing gas supply line 35, thereby bubbling the oxygen-containing gas into the electrolyte solution. Consequently, the electrolyte solution in which oxygen is dissolved flows inside the discharging positive electrode 11c as the first flow F1. On the other hand, the electrolyte solution outside the separation member 30 flows, as the second flow F2, through a flow path formed between an outer peripheral surface of the discharging positive electrode 11c and the inner peripheral surface of the charging positive electrode 12a and a flow path formed between the outer peripheral surface of the charging positive electrode 12a and the inner peripheral surface of the negative electrode 13c.

The electrolyte solution of the first flow F1 flows out from the inside of the discharging positive electrode 11c to the inside of the separation member 30 disposed in the second chamber section 22, and flows out from the inside of the separation member 30 via the opening 31a. On the other hand, the electrolyte solution of the second flow F2 flows out to the second chamber section 22 via the second end portion 10b of the electrode device 10. The electrolyte solution where the first flow F1 and the second flow F2 join in the second chamber section 22 flows out from the second chamber section 22 via the third opening 24a. However, for the purpose of separating the gas contained in the first flow F1, the first flow F1 and the second flow F2 may flow out separately from the second chamber section 22 without being joined.

While the electrolyte solution thus flows in the cell 2, the same reactions as the reactions described in Embodiment 1 occur in the negative electrode 13c and the discharging positive electrode 11c. However, in Embodiment 3, oxygen contained in the electrolyte solution flowing through the discharging positive electrode 11c diffuses through the innermost layer and the intermediate layer of the discharging positive electrode 11c, and hydroxide ions are produced by reactions between the air, water in the electrolyte solution of the second flow F2, and electrons flowing to the discharging positive electrode 11c due to the oxygen reduction catalyst in the outermost layer. Other operations are the same as those of Embodiment 1, and technical effect obtained by providing the separation membrane 26 is also the same as that of Embodiment 1.

Embodiment 3 is the same as Embodiment 1 in that the discharging positive electrode 11c, the charging positive electrode 12a, and the negative electrode 13c are disposed such that their cross sections are concentric. Further, Embodiment 3 is the same as Embodiment 1 in that when the metal-air battery system 1 is charged, electrons flow to the negative electrode 13c and zinc ions in the electrolyte solution receive the electrons at the negative electrode 13c, thereby depositing zinc on the negative electrode 13c. Furthermore, Embodiment 3 is the same as Embodiment 1 in that when the metal-air battery system 1 is charged, even if the dendrite connecting the negative electrode 13c and the charging positive electrode 12a causes an internal short circuit, discharge using the negative electrode 13c and the discharging positive electrode 11c is possible. Therefore, Embodiment 3 can also obtain the same technical effect as the technical effect obtained in Embodiment 1.

In Embodiment 3, since the third electrode 13 arranged on the outermost side in the electrode device 10 is the negative electrode 13c, the area of the negative electrode relatively increases compared to a case where the first electrode 11 or the second electrode 12 is the negative electrode. Therefore, the amount of zinc deposited on the negative electrode 13c in Embodiment 3 increases compared to Embodiment 1, making it possible to increase an electricity storage capacity compared to Embodiment 1.

### <Modified example of metal-air battery system according to Embodiment 3 of present disclosure>

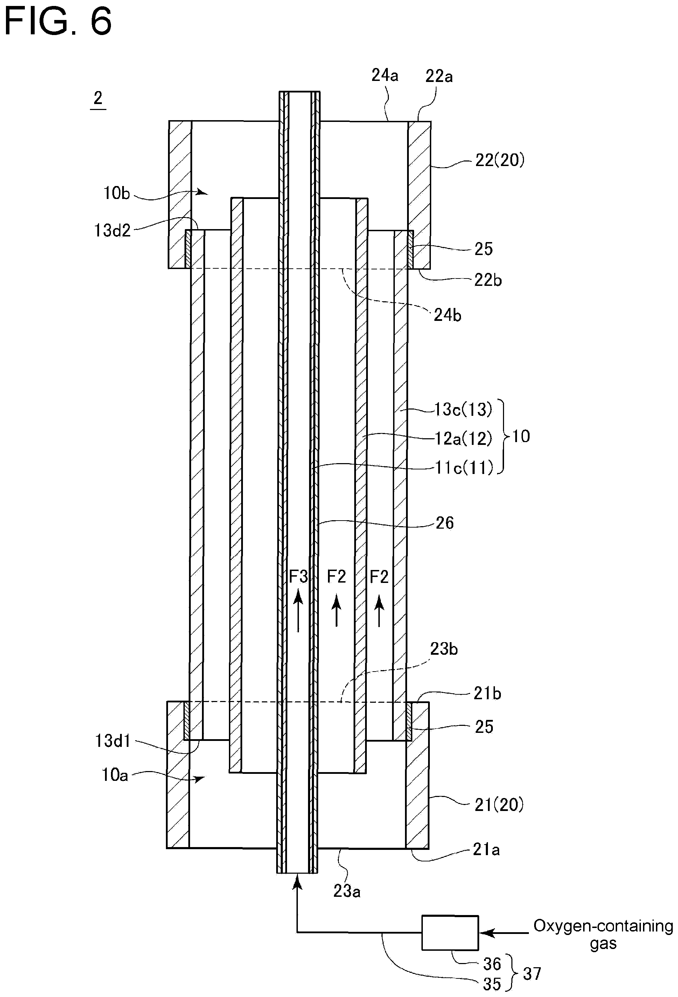

As shown in FIG. 6, in the cell 2 in the modified example of the metal-air battery system 1 according to Embodiment 3, only the discharging positive electrode 11c of the electrode device 10 is inserted into the first opening 23a and the third opening 24a. That is, both ends of the discharging positive electrode 11c extend from the first opening 23a and the third opening 24a to the outside the first chamber section 21 and the second chamber section 22. A downstream end of the oxygen-containing gas supply line 35 is connected to an end portion of the discharging positive electrode 11c extending from the first opening 23a to the outside of the first chamber section 21. Other configurations are the same as those in Embodiment 3, except the separation member 30 (see FIG. 4) is not provided.

In this modified example of Embodiment 3, separated from the second flow F2, an oxygen-containing gas flow F3 flows inside the discharging positive electrode 11c. Also in this form, while the electrolyte solution and the oxygen-containing gas circulate in the cell 2, discharge is performed by the same reaction as in Embodiment 3. Further, the charging operation is also the same as in Embodiment 3. Therefore, also in this modified example, the same technical effect as in Embodiment 3 can be obtained.

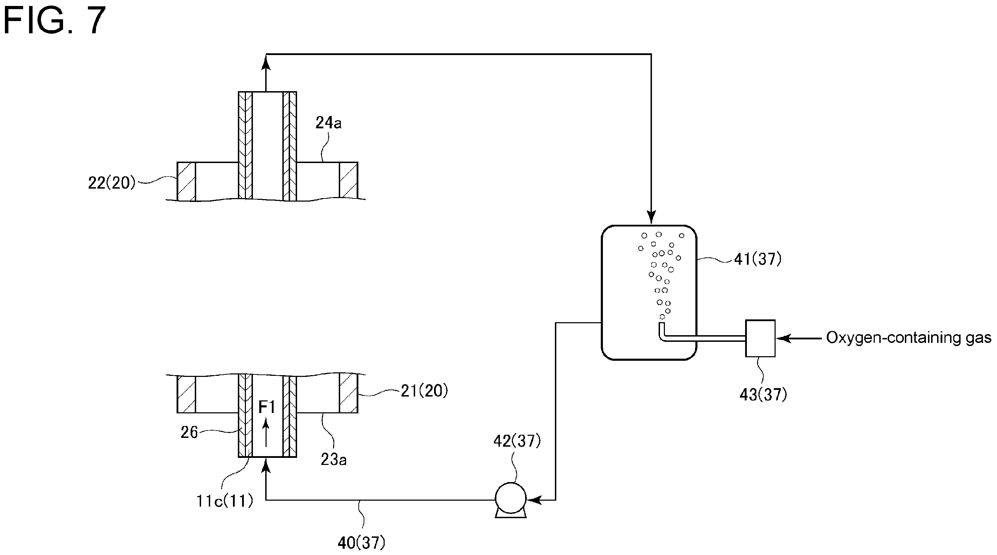

In this modified example of Embodiment 3, the oxygen-containing gas is flowed inside the discharging positive electrode 11c, but the present disclosure is not limited to this form. As shown in FIG. 7, the electrolyte solution in which oxygen is dissolved may be flowed inside the discharging positive electrode 11c as the first flow F1. In this form, the both ends of the discharging positive electrode 11c are connected to both ends of a circulation line 40 where the electrolyte solution circulates. The circulation line 40 includes an electrolytic tank 41 for storing the electrolyte solution, and a pump 42. The circulation line 40, the electrolytic tank 41, and the pump 42 are disposed separately from the circulation line 3 (see FIG. 1), the electrolytic tank 4 (see FIG. 1), and the pump 5 (see FIG. 1), respectively.

The electrolytic tank 41 is provided with a bubbling device 43 for supplying an oxygen-containing gas into the electrolyte solution stored in the electrolytic tank 41 while bubbling the oxygen-containing gas. Whereby, the electrolyte solution of the first flow F1 can be an electrolyte solution in which oxygen is dissolved. Thus, in the modified example of Embodiment 3, either the gas containing oxygen or the electrolyte solution containing oxygen may flow inside the discharging positive electrode 11c. That is, a fluid containing oxygen can be flowed inside the discharging positive electrode 11c. In this modified example, the configuration including the oxygen-containing gas supply line 35 and the compressor 36 or the configuration including the circulation line 40, the electrolytic tank 41, the pump 42, and the bubbling device 43 is an oxygen-containing fluid supply device 37 for flowing, inside the discharging positive electrode 11c, the fluid containing oxygen.

### (Embodiment 4)

Next, the metal-air battery system according to Embodiment 4 will be described. The metal-air battery system according to Embodiment 4 is obtained by modifying the configuration of the electrode device 10 with respect to Embodiment 3. In Embodiment 4, the same constituent elements as those in Embodiment 3 are associated with the same reference signs and not described again in detail.

### <Configuration of metal-air battery system according to Embodiment 4 of present disclosure>

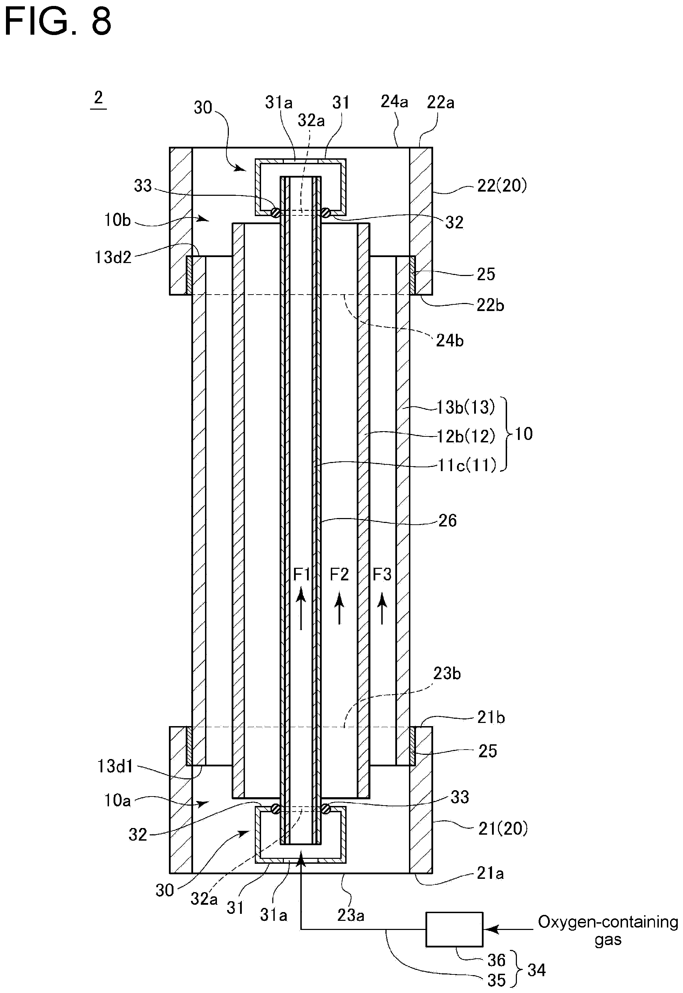

As shown in FIG. 8, in Embodiment 3 of the present disclosure, the cell 2 includes the electrode device 10 with the discharging positive electrode 11c as the first electrode 11, the negative electrode 12b as the second electrode 12, and a charging positive electrode 13b as the third electrode 13. All of the discharging positive electrode 11c, the negative electrode 12b, and the charging positive electrode 13b have a tubular shape. In Embodiment 4, the charging positive electrode 13b will be described not as an electrode having a tubular shape manufactured in a mesh shape as in Embodiment 1 but as an electrode having a non-mesh tubular shape. Other configurations are the same as those in Embodiment 3.

### <Operation of metal-air battery system according to Embodiment 4 of present disclosure>

Since the operation of Embodiment 4 and the operation of Embodiment 3 are the same, the same technical effect as in Embodiment 3 can be obtained. Further, in Embodiment 4 as well, since the charging positive electrode 11b, the negative electrode 12b, and the discharging positive electrode 13a are disposed such that their cross sections are concentric, the same technical effect as in Embodiment 1 can be obtained.

As in Embodiment 2, in Embodiment 4 as well, a measuring instrument is provided to measure a potential difference between the negative electrode 12b and the discharging positive electrode 11c, and this potential difference is monitored during charging, making it possible to detect that internal short circuit has occurred between the negative electrode 12b and the discharging positive electrode 11c. If the internal short circuit between the negative electrode 12b and the discharging positive electrode 11c is detected, the internal short circuit can be eliminated by discharging using the negative electrode 12b and the charging positive electrode 13b.

### <Modified example of metal-air battery system according to Embodiment 4 of present disclosure>

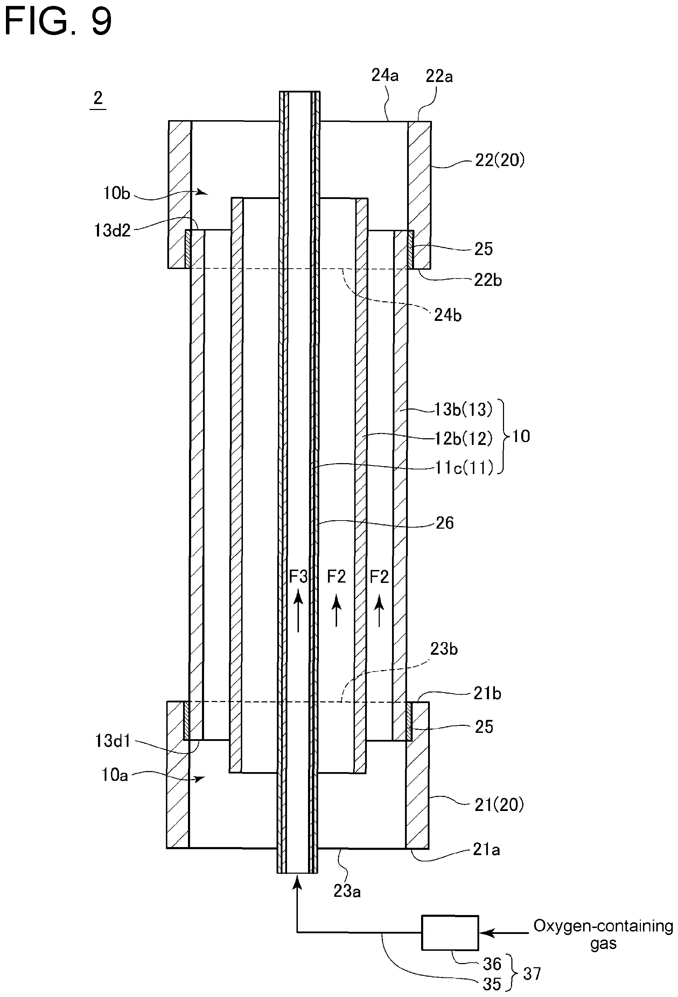

In Embodiment 4 as well, as in Embodiment 3, a modified example is possible in which, instead of the first flow F1 of the electrolyte solution flowing inside the discharging positive electrode 11c, the oxygen-containing gas flow F3 is used as shown in FIG. 9. Further, by applying the configuration shown in FIG. 7 to this modified example, the electrolyte solution in which oxygen is dissolved can also be used as the first flow F1. Furthermore, when the mesh charging positive electrode 13b is used in Embodiment 4, the separation membrane 26 is also disposed on the inner peripheral surface of the charging positive electrode 13b, making it possible to suppress leakage of the electrolyte solution from the cell 2 via the charging positive electrode 13b.

### (Embodiment 5)

Next, the metal-air battery system according to Embodiment 5 will be described. The metal-air battery system according to Embodiment 5 is obtained by modifying the configuration of the electrode device 10 with respect to Embodiment 1. In Embodiment 5, the same constituent elements as those in Embodiment 1 are associated with the same reference signs and not described again in detail.

### <Configuration of metal-air battery system according to Embodiment 5 of present disclosure>

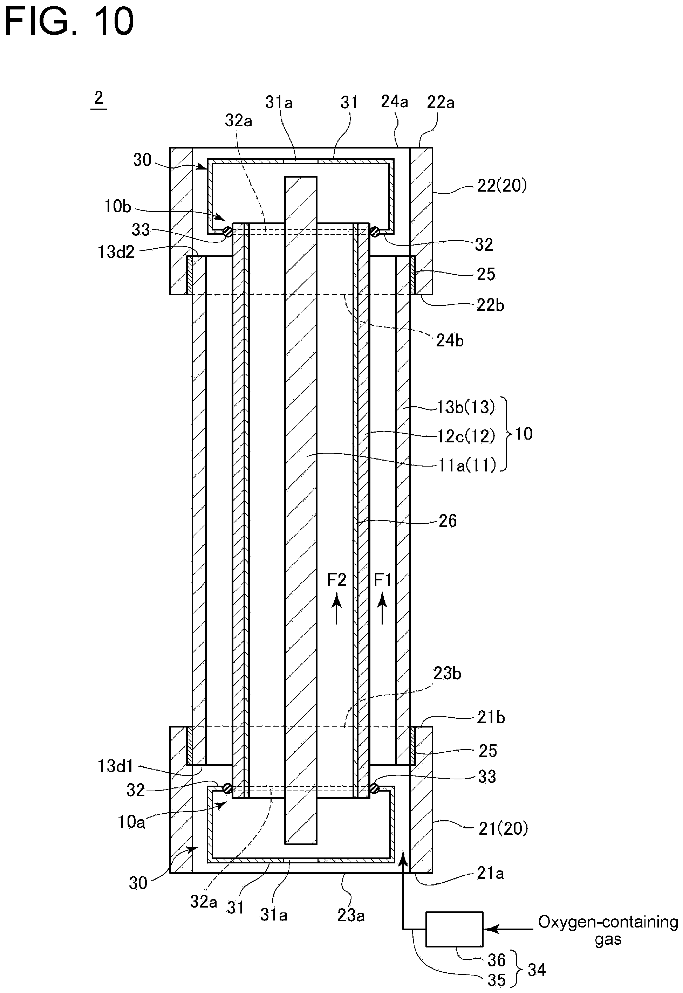

As shown in FIG. 10, in Embodiment 5 of the present disclosure, the cell 2 includes the electrode device 10 with the negative electrode 11a as the first electrode 11, a discharging positive electrode 12c as the second electrode 12, and the charging positive electrode 13b as the third electrode 13. An inner peripheral surface of the discharging positive electrode 12c, that is, a surface facing the negative electrode 11a is provided with the separation membrane 26.

Each of the first chamber section 21 and the second chamber section 22 is internally provided with the separation member 30 for separating the flow of the electrolyte solution in the chamber 20 into the first flow F1 flowing through a flow path between an outer peripheral surface of the discharging positive electrode 12c and the inner peripheral surface of the charging positive electrode 13b, and the second flow F2 flowing through a flow path between the outer peripheral surface of the negative electrode 11a and the inner peripheral surface of the discharging positive electrode 12c. The separation member 30 has the tubular shape in which the end faces 31, 32 are disposed at the both ends in the axial direction of the cell 2 when disposed inside the first chamber section 21 and the second chamber section 22, and the openings 31a, 32a are respectively formed in the end faces 31, 32. The discharging positive electrode 12c is inserted into the one opening 32a, and the seal member 33 such as the O-ring is disposed between the inner peripheral edge of the opening 32a and the outer peripheral surface of the discharging positive electrode 12c. The other opening 31a faces the first opening 23a or the third opening 24a.

The oxygen-containing gas supply device 34 is provided to supply the oxygen-containing gas such as air to the electrolyte solution of the first flow F1 outside the separation member 30 disposed in, among the first chamber section 21 and the second chamber section 22, the first chamber section 21 located upstream in the flow direction of the electrolyte solution flowing in the cell 2. The configuration of the oxygen-containing gas supply device 34 in Embodiment 5 is the same as in Embodiment 3. Other configurations are the same as those in Embodiment 1.

### <Operation of metal-air battery system according to Embodiment 5 of present disclosure>

The description of the operation of Embodiment 3 applies to the operation of the metal-air battery system 1 according to Embodiment 5, except that the first flow F1 is the flow flowing through the flow path between the outer peripheral surface of the discharging positive electrode 12c and the inner peripheral surface of the charging positive electrode 13b and the second flow F2 is the flow flowing through the flow path between the outer peripheral surface of the negative electrode 11a and the inner peripheral surface of the discharging positive electrode 12c. Therefore, Embodiment 5 can also obtain the same technical effect as the technical effect obtained in Embodiment 3. Further, in Embodiment 5 as well, since the negative electrode 11a, the discharging positive electrode 12c, and the charging positive electrode 13b are disposed such that their cross sections are concentric, the same technical effect as the technical effect obtain in Embodiment 1 can be obtained.

In Embodiment 5, since the first electrode 11 is the negative electrode 11a and the third electrode 13 is the charging positive electrode 13b, a distance between the negative electrode 11a and the charging positive electrode 13b is large compared to Embodiments 1 to 4. Therefore, in Embodiment 5, an internal short circuit is less likely to occur when the metal-air battery system 1 is charged, compared to Embodiments 1 to 4.

As in Embodiments 2 and 4, in Embodiment 5 as well, a measuring instrument is provided to measure a potential difference between the negative electrode 11a and the discharging positive electrode 12c, and this potential difference is monitored during charging, making it possible to detect that internal short circuit has occurred between the negative electrode 11a and the discharging positive electrode 12c. If the internal short circuit between the negative electrode 11a and the discharging positive electrode 12c is detected, the internal short circuit can be eliminated by discharging using the negative electrode 11a and the charging positive electrode 13b.

In Embodiment 5, since the separation membrane 26 is disposed on the inner peripheral surface of the discharging positive electrode 12c, it is possible to prevent oxygen contained in the electrolyte solution of the first flow F1 from moving to the electrolyte solution of the second flow F2 via the discharging positive electrode 12c. Whereby, it is possible to suppress formation of a high-resistivity layer of zinc oxide in the electrolyte solution of the second flow F2.

### <Modified example of metal-air battery system according to Embodiment 5 of present disclosure>

Further, when the mesh charging positive electrode 13b is also used in Embodiment 5, the separation membrane 26 is also disposed on the inner peripheral surface of the charging positive electrode 13b, making it possible to suppress leakage of the electrolyte solution from the cell 2 via the charging positive electrode 13b.

### (Embodiment 6)

Next, the metal-air battery system according to Embodiment 6 will be described. The metal-air battery system according to Embodiment 6 is obtained by modifying the configuration of the electrode device 10 with respect to Embodiment 5. In Embodiment 6, the same constituent elements as those in Embodiment 5 are associated with the same reference signs and not described again in detail.

### <Configuration of metal-air battery system according to Embodiment 6 of present disclosure>

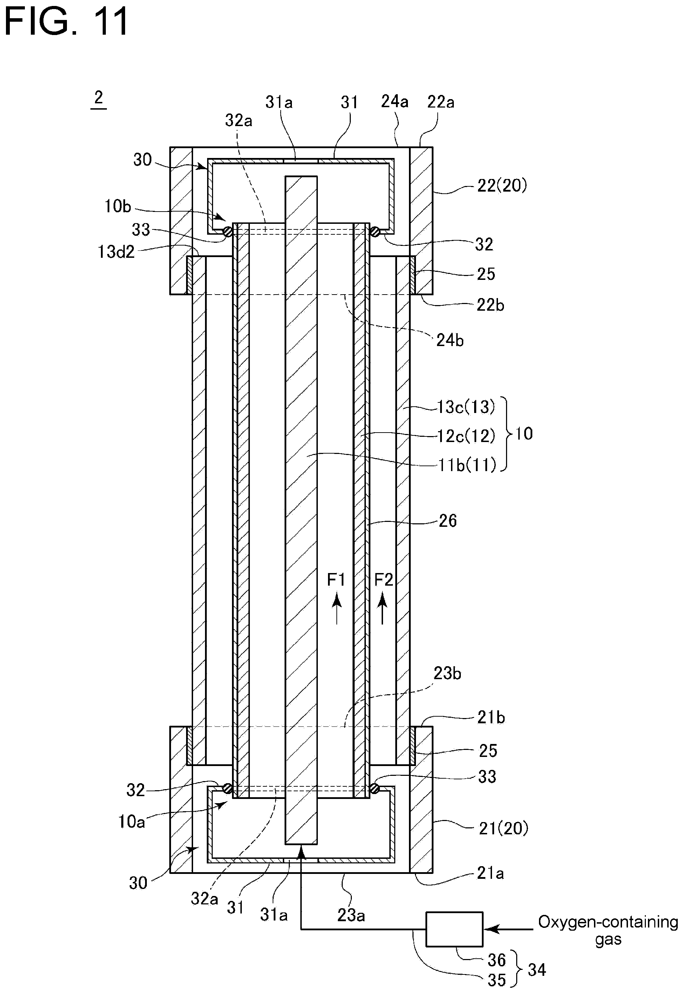

As shown in FIG. 11, in Embodiment 6 of the present disclosure, the cell 2 includes the electrode device 10 with the charging positive electrode 11b as the first electrode 11, the discharging positive electrode 12c as the second electrode 12, and the negative electrode 13c as the third electrode 13. An outer peripheral surface of the discharging positive electrode 12c, that is, a surface facing the negative electrode 13c is provided with the separation membrane 26. The three-layer structure of the discharging positive electrode 12c is the same as the three-layer structure of the discharging positive electrode 11c (see FIG. 5) of Embodiments 3 and 4.

Each of the first chamber section 21 and the second chamber section 22 is internally provided with the separation member 30 for separating the flow of the electrolyte solution in the chamber 20 into the first flow F1 flowing through a flow path between the outer peripheral surface of the charging positive electrode 11b and the inner peripheral surface of the discharging positive electrode 12c, and the second flow F2 flowing through a flow path between the outer peripheral surface of the discharging positive electrode 12c and the inner peripheral surface of the negative electrode 13c. The oxygen-containing gas supply device 34 is provided to supply the oxygen-containing gas such as air to the electrolyte solution of the first flow F1 inside the separation member 30 disposed in, among the first chamber section 21 and the second chamber section 22, the first chamber section 21 located upstream in the flow direction of the electrolyte solution flowing in the cell 2. Other configurations are the same as those in Embodiment 5.

### <Operation of metal-air battery system according to Embodiment 6 of present disclosure>

As in Embodiment 5, the description of the operation of Embodiment 3 applies to the operation of the metal-air battery system 1 according to Embodiment 6, except that the first flow F1 is the flow flowing through the flow path the outer peripheral surface of the charging positive electrode 11b and the inner peripheral surface of the discharging positive electrode 12c and the second flow F2 is the flow flowing through the flow path between the outer peripheral surface of the discharging positive electrode 12c and the inner peripheral surface of the negative electrode 13c. Therefore, Embodiment 6 can also obtain the same technical effect as the technical effect obtained in Embodiment 3. Further, in Embodiment 6 as well, since the charging positive electrode 11b, the discharging positive electrode 12c, and the negative electrode 13c are disposed such that their cross sections are concentric, the same technical effect as the technical effect obtain in Embodiment 1 can be obtained.

As in Embodiment 5, in Embodiment 6 as well, since the first electrode 11 is the charging positive electrode 11b and the third electrode 13 is the negative electrode 13c, a distance between the charging positive electrode 11b and the negative electrode 13c is large compared to Embodiments 1 to 4. Therefore, in Embodiment 6, an internal short circuit is less likely to occur when the metal-air battery system 1 is charged, compared to Embodiments 1 to 4.

In Embodiment 6, since the third electrode 13 arranged on the outermost side in the electrode device 10 is the negative electrode 13c, the area of the negative electrode relatively increases compared to a case where the first electrode 11 or the second electrode 12 is the negative electrode. Therefore, the amount of zinc deposited on the negative electrode 13c in Embodiment 6 increases compared to Embodiment 1, making it possible to increase the electricity storage capacity compared to Embodiment 1.

As in Embodiment 5, in Embodiment 6 as well, a measuring instrument is provided to measure a potential difference between the negative electrode 13c and the discharging positive electrode 12c, and this potential difference is monitored during charging, making it possible to detect that internal short circuit has occurred between the negative electrode 13c and the discharging positive electrode 12c. If the internal short circuit between the negative electrode 13c and the discharging positive electrode 12c is detected, the internal short circuit can be eliminated by discharging using the negative electrode 13c and the charging positive electrode 11b.

In Embodiment 6, since the separation membrane 26 is disposed on the outer peripheral surface of the discharging positive electrode 12c, it is possible to prevent oxygen contained in the electrolyte solution of the first flow F1 from moving to the electrolyte solution of the second flow F2 via the discharging positive electrode 12c. Whereby, it is possible to suppress formation of a high-resistivity layer of zinc oxide in the electrolyte solution of the second flow F2.

The contents described in the above embodiments would be understood as follows, for instance.
[1] A metal-air battery system according to one aspect is a metal-air battery system (1) that includes a cell (2) including: a chamber (20); and an electrode device (10) housed in the chamber (20). The electrode device (10) includes: a first electrode (11); a tubular second electrode (12) disposed so as to surround the first electrode (11) on a radially outer side of the first electrode (11); and a tubular third electrode (13) disposed so as to surround the second electrode (12) on a radially outer side of the second electrode (12), and is configured such that an electrolyte solution flows at least between an outer peripheral surface of the first electrode (11) and an inner peripheral surface of the third electrode (13). A combination of the first electrode (11), the second electrode (12), and the third electrode (13) is a combination of a negative electrode (11a, 12b, 13c) containing metal, a charging positive electrode (11b, 12a, 13b), and a discharging positive electrode (11c, 12c, 13a).
   According to the metal-air battery system of the present disclosure, since the difference in electrode area between the inner side and the outer side can be obtained by arranging the electrodes such that their cross sections are concentric, it is possible to reduce the current density during operation of the electrodes arranged on the outer side compared to that of the central electrode. The resistance of the system can be reduced by utilizing this effect to arrange, on the outer side, the electrodes requiring a reduction in resistance loss, making it possible to efficiently charge/discharge. Further, since the electrolyte solution is supplied in circulation to the cell, electricity can be stored.
[2] A metal-air battery system according to another aspect is the metal-air battery system of [1], further including a switching device (7) for switching such that the negative electrode (11a, 12b, 13c) is electrically connected to either the charging positive electrode (11b, 12a, 13b) or the discharging positive electrode (11c, 12c, 13a). The switching device (7) includes: a first switch (7c) for electrically opening and closing between the discharging positive electrode (11c, 12c, 13a) and the negative electrode (11a, 12b, 13c); and a second switch (7d) for electrically opening and closing between the negative electrode (11a, 12b, 13c) and the charging positive electrode (11b, 12a, 13b).
   With such configuration, since the negative electrode and the charging positive electrode are used to charge and the negative electrode and the discharging positive electrode are used to discharge, it is possible to discharge even if internal short circuit occurs during charging. Whereby, it is possible to charge/discharge without any trouble. Further, it is possible to reduce the risk of opposite reactions occurring at the positive electrode during charging and discharging, and improvements in efficiency and lifetime can be expected.
[3] A metal-air battery system according to still another aspect is the metal-air battery system of [2], wherein the switching device (7) includes a first diode (7a) for flowing a current in a direction from the discharging positive electrode (11c, 12c, 13a) to the negative electrode (11a, 12b, 13c).
   With such configuration, in a state where the charging positive electrode is immersed in the electrolyte solution, it is possible to reduce the risk of opposite reactions occurring at the positive electrode during charging and discharging, and improvements in efficiency and lifetime can be expected. Further, compared to the switching device in the above [2], it is possible to configure a switching device which is superior in durability and low in cost.
[4] A metal-air battery system according to yet another aspect is the metal-air battery system of [3], wherein the switching device (7) further includes a second diode (7ba) for flowing the current in a direction from the negative electrode (11a, 12b, 13c) to the charging positive electrode (11b, 12a, 13b).
   With such configuration, it is possible to reduce the risk of opposite reactions occurring at the positive electrode during charging and discharging, and improvements in efficiency and lifetime can be expected. Further, compared to the switching device in the above [2], it is possible to configure a switching device which is superior in durability and low in cost.
[5] A metal-air battery system according to yet another aspect is the metal-air battery system of any of [1] to [4], wherein the electrode device (10) has a shape extending in an axial direction, and includes a first end portion (10a) which is one end portion in the axial direction and a second end portion (10b) which is another end portion in the axial direction, wherein the chamber (20) includes: a first chamber section (21) disposed so as to internally house at least one end portion (13d1) of the third electrode (13) on a side of the first end portion (10a) of the electrode device (10); and a second chamber section (22) disposed so as to internally house at least another end portion (13d2) of the third electrode (13) on a side of the second end portion (10b) of the electrode device (10), wherein the first chamber section (21) has a first end face (21a) and a second end face (21b) located away from each other in the axial direction, and the first end face (21a) and the second end face (21b) are respectively formed with a first opening (23a) and a second opening (23b), wherein the second chamber section (22) has a third end face (22a) and a fourth end face (22b) located away from each other in the axial direction, and the third end face (22a) and the fourth end face (22b) are respectively formed with a third opening (24a) and a fourth opening (24b), and wherein the first electrode (11), the second electrode (12), and the third electrode (13) forming the electrode device (10) are respectively inserted into the second opening (23b) and the fourth opening (24b), and a seal member (25) for sealing between an outer peripheral surface of the third electrode (13) and respective inner peripheral surfaces of the first chamber section (21) and the second chamber section (22) is disposed therebetween.
   With such configuration, since the seal member disposed between the outer peripheral surface of the third electrode and the respective inner peripheral surfaces of the first chamber and the second chamber seals therebetween, it is possible to suppress leakage of the electrolyte solution from the chamber between the first opening and the third opening.
[6] A metal-air battery system according to yet another aspect is the metal-air battery system of [5], wherein the third electrode (13) is the discharging positive electrode (13a).
   With such configuration, even if a short circuit occurs between the negative electrode and the charging positive electrode during charging, it is possible to discharge between the negative electrode and the discharging positive electrode.
[7] A metal-air battery system according to yet another aspect is the metal-air battery system of [5], wherein the first electrode (11) is the discharging positive electrode (11c) having a tubular shape, wherein each of the first chamber section (21) and the second chamber section (22) is internally provided with a separation member (30) for separating a flow of the electrolyte solution in the chamber (20) into a first flow (F1) flowing inside the discharging positive electrode (11c) and a second flow (F2) flowing outside the discharging positive electrode (11c), and wherein the metal-air battery system further includes an oxygen-containing gas supply device (34) for supplying an oxygen-containing gas to the electrolyte solution of the first flow (F1).
   With such configuration, even if a short circuit occurs between the negative electrode and the charging positive electrode during charging, it is possible to discharge between the negative electrode and the discharging positive electrode.
[8] A metal-air battery system according to yet another aspect is the metal-air battery system of [5], wherein the first electrode (11) is the discharging positive electrode (11c) having a tubular shape, wherein only the discharging positive electrode (11c) of the electrode device (10) is inserted into the first opening (23a) and the third opening (24a), and wherein an oxygen-containing fluid supply device (37) is provided to flow, inside the discharging positive electrode (11c), a fluid containing oxygen.
   With such configuration, even if a short circuit occurs between the negative electrode and the charging positive electrode during charging, it is possible to discharge between the negative electrode and the discharging positive electrode.
[9] A metal-air battery system according to yet another aspect is the metal-air battery system of [7] or [8], wherein the second electrode (12) is the charging positive electrode (12a), and the third electrode (13) is the negative electrode (13c).
   With such configuration, the area of the negative electrode relatively increases compared to a case where the first electrode or the second electrode is the negative electrode. Therefore, the amount of metal deposited on the negative electrode increases, making it possible to increase the electricity storage capacity.
[10] A metal-air battery system according to yet another aspect is the metal-air battery system of [7] or [8], wherein the second electrode (12) is the negative electrode (12b), and the third electrode (13) is the charging positive electrode (13b).
   With such configuration, an internal short circuit between the negative electrode and the charging positive electrode can be detected in advance by monitoring the voltage between the negative electrode and the discharging positive electrode.
[11] A metal-air battery system according to yet another aspect is the metal-air battery system of [5], wherein the second electrode (12) is the discharging positive electrode (12c), wherein each of the first chamber section (21) and the second chamber section (22) is internally provided with a separation member (30) for separating a flow of the electrolyte solution in the chamber (20) into a first flow (F1) flowing between the charging positive electrode (11b, 13b) and the discharging positive electrode (12c), and a second flow (F2) flowing between the discharging positive electrode (12c) and the negative electrode (11a, 13c), and wherein the metal-air battery system (1) further includes an oxygen-containing gas supply device (34) for supplying an oxygen-containing gas to the electrolyte solution of the first flow (F1).
   With such configuration, the distance between the negative electrode and the charging positive electrode increases compared to the configuration where the negative electrode and the charging positive electrode are adjacent to each other, making it unlikely to cause an internal short circuit between the negative electrode and the charging positive electrode. However, even if the internal short circuit occurs during charging, it is possible to discharge between the negative electrode and the discharging positive electrode. Further, the internal short circuit between the negative electrode and the charging positive electrode can be detected in advance by monitoring the voltage between the negative electrode and the discharging positive electrode.
[12] A metal-air battery system according to yet another aspect is the metal-air battery system of [11], wherein the first electrode (11) is the charging positive electrode (11b), and the third electrode (13) is the negative electrode (13c).
   With such configuration, the area of the negative electrode relatively increases compared to a case where the first electrode or the second electrode is the negative electrode. Therefore, the amount of metal deposited on the negative electrode increases, making it possible to increase the electricity storage capacity.
[13] A metal-air battery system according to yet another aspect is the metal-air battery system of [11], wherein the first electrode (11) is the negative electrode (11a), and the third electrode (13) is the charging positive electrode (13b).
   With such configuration, since the difference in electrode area between the inner side and the outer side can be obtained by arranging electrodes such that their cross sections are concentric, it is possible to reduce the current density during operation of the electrodes arranged on the outer side compared to that of the central electrode. The resistance of the system can be reduced by utilizing this effect to arrange, on the outer side, the electrodes requiring a reduction in resistance loss, making it possible to efficiently charge/discharge. Further, since the electrolyte solution is supplied in circulation to the cell, electricity can be stored.
[14] A metal-air battery system according to yet another aspect is the metal-air battery system of any of [1] to [13], wherein the discharging positive electrode (11c, 12c, 13a) includes a separation membrane (26) on a surface facing the negative electrode (11a, 12b, 13c).

With such configuration, depending on the respective positions of the negative electrode, the charging positive electrode, and the discharging positive electrode, it is possible to achieve any of the reduction in loss of the overvoltage of the reaction in the discharging positive electrode, suppression of the alteration and deterioration in the electrolyte solution, suppression of leakage of the electrolyte solution from the discharging positive electrode, and suppression of formation of the high-resistivity layer due to contact between the negative electrode and the oxygen-containing gas.

### Reference Signs List

- 1: Metal-air battery system
- 2: Cell
- 7: Switching device
- 7a: First diode
- 7b: Second diode
- 7c: First switch
- 7d: Second switch
- 10: Electrode device
- 10a: First end portion
- 10b: Second end portion
- 11: First electrode
- 11a: Negative electrode
- 11b: Charging positive electrode
- 11c: Discharging positive electrode
- 12: Second electrode
- 12a: Charging positive electrode
- 12b: Negative electrode
- 12c: Discharging positive electrode
- 13: Third electrode
- 13a: Discharging positive electrode
- 13b: Charging positive electrode
- 13c: Negative electrode
- 13d1: One end portion (of third electrode)
- 13d2: Another end portion (of third electrode)
- 20: Chamber
- 21: First chamber section
- 21a: First end face
- 21b: Second end face
- 22: Second chamber section
- 22a: Third end face
- 22b: Fourth end face
- 23a: First opening
- 23b: Second opening
- 24a: Third opening
- 24b: Fourth opening
- 25: Seal member
- 26: Separation wall
- 30: Separation member
- 34: Oxygen-containing gas supply device
- 37: Oxygen-containing fluid supply device
- F1: First flow
- F2: Second flow

## Claims

1. A metal-air battery system (1), comprising a cell (2) including:
a chamber (20); and
an electrode device (10) housed in the chamber (20),
wherein the electrode device (10) includes:
a first electrode (11);
a tubular second electrode (12) disposed so as to surround the first electrode (11) on a radially outer side of the first electrode (11); and
a tubular third electrode (13) disposed so as to surround the second electrode (12) on a radially outer side of the second electrode (12), and is configured such that an electrolyte solution flows at least between an outer peripheral surface of the first electrode (11) and an inner peripheral surface of the third electrode (13),
wherein a combination of the first electrode (11), the second electrode (12), and the third electrode (13) is a combination of a negative electrode (11a, 12b, 13c) containing metal, a charging positive electrode (11b, 12a, 13b), and a discharging positive electrode (11c, 12c, 13a),
wherein the electrode device (10) has a shape extending in an axial direction, and includes a first end portion (10a) which is one end portion in the axial direction and a second end portion (10b) which is another end portion in the axial direction,
wherein the chamber (20) includes:
a first chamber section (21) disposed so as to internally house at least one end portion (13d1) of the third electrode (13) on a side of the first end portion (10a) of the electrode device (10); and
a second chamber section (22) disposed so as to internally house at least another end portion (13d2) of the third electrode (13) on a side of the second end portion (10b) of the electrode device (10),
wherein the first chamber section (21) has a first end face (21a) and a second end face (21b) located away from each other in the axial direction, and the first end face (21a) and the second end face (21b) are respectively formed with a first opening (23a) and a second opening (23b),
wherein the second chamber section (22) has a third end face (22a) and a fourth end face (22b) located away from each other in the axial direction, and the third end face (22a) and the fourth end face (22b) are respectively formed with a third opening (24a) and a fourth opening (24b), and
wherein the first electrode (11), the second electrode (12), and the third electrode (13) forming the electrode device (10) are respectively inserted into the second opening (23b) and the fourth opening (24b), and a seal member (25) for sealing between an outer peripheral surface of the third electrode (13) and respective inner peripheral surfaces of the first chamber section (21) and the second chamber section (22) is disposed therebetween.

2. The metal-air battery system (1) according to claim 1,
further comprising a switching device (7) for switching such that the negative electrode (11a, 12b, 13c) is electrically connected to either the charging positive electrode (11b, 12a, 13b) or the discharging positive electrode (11c, 12c, 13a),
wherein the switching device (7) includes:
a first switch (7c) for electrically opening and closing between the discharging positive electrode (11c, 12c, 13a) and the negative electrode (11a, 12b, 13c); and
a second switch (7d) for electrically opening and closing between the negative electrode (11a, 12b, 13c) and the charging positive electrode (11b, 12a, 13b).

3. The metal-air battery system (1) according to claim 1,
further comprising a switching device (7) for switching such that the negative electrode (11a, 12b, 13c) is electrically connected to either the charging positive electrode (11b, 12a, 13b) or the discharging positive electrode (11c, 12c, 13a),
wherein the switching device (7) includes a first diode (7a) for flowing a current in a direction from the discharging positive electrode (11c, 12c, 13a) to the negative electrode (11a, 12b, 13c).

4. The metal-air battery system (1) according to claim 3,
wherein the switching device (7) further includes a second diode (7b) for flowing the current in a direction from the negative electrode (11a, 12b, 13c) to the charging positive electrode (11b, 12a, 13b).

5. The metal-air battery system (1) according to any one of claims 1 to 4,
wherein the third electrode (13) is the discharging positive electrode (13a).

6. The metal-air battery system (1) according to any one of claims 1 to 4,
wherein the first electrode (11) is the discharging positive electrode (11c) having a tubular shape,
wherein each of the first chamber section (21) and the second chamber section (22) is internally provided with a separation member (30) for separating a flow of the electrolyte solution in the chamber (20) into a first flow (F1) flowing inside the discharging positive electrode (11c) and a second flow (F2) flowing outside the discharging positive electrode (11c), and
wherein the metal-air battery system (1) further comprises an oxygen-containing gas supply device (34) for supplying an oxygen-containing gas to the electrolyte solution of the first flow (F1).

7. The metal-air battery system (1) according to any one of claims 1 to 4,
wherein the first electrode (11) is the discharging positive electrode (11c) having a tubular shape,
wherein only the discharging positive electrode (11c) of the electrode device (10) is inserted into the first opening (23a) and the third opening (24a), and
wherein an oxygen-containing fluid supply device (37) is provided to flow, inside the discharging positive electrode (11c), a fluid containing oxygen.

8. The metal-air battery system (1) according to claim 6 or 7,
wherein the second electrode (12) is the charging positive electrode (12a), and the third electrode (13) is the negative electrode (13c).

9. The metal-air battery system (1) according to claim 6 or 7,
wherein the second electrode (12) is the negative electrode (12b), and the third electrode (13) is the charging positive electrode (13b).

10. The metal-air battery system (1) according to any one of claims 1 to 4,
wherein the second electrode (12) is the discharging positive electrode (12c),
wherein each of the first chamber section (21) and the second chamber section (22) is internally provided with a separation member (30) for separating a flow of the electrolyte solution in the chamber (20) into a first flow (F1) flowing between the charging positive electrode (11b, 13b) and the discharging positive electrode (12c), and a second flow (F2) flowing between the discharging positive electrode (12c) and the negative electrode (11a, 13c), and
wherein the metal-air battery system (1) further comprises an oxygen-containing gas supply device (34) for supplying an oxygen-containing gas to the electrolyte solution of the first flow (F1).

11. The metal-air battery system (1) according to claim 10,
wherein the first electrode (11) is the charging positive electrode (11b), and the third electrode (13) is the negative electrode (13c).

12. The metal-air battery system (1) according to claim 10,
wherein the first electrode (11) is the negative electrode (11a), and the third electrode (13) is the charging positive electrode (13b).

13. The metal-air battery system (1) according to any one of claims 1 to 12,
wherein the discharging positive electrode (11c, 12c, 13a) includes a separation membrane (26) on a surface facing the negative electrode (11a, 12b, 13c).

## Patentansprüche

1. Metall-Luft-Batteriesystem (1), umfassend eine Zelle (2), einschließend:
eine Kammer (20); und
eine Elektrodenvorrichtung (10), die in der Kammer (20) untergebracht ist,
wobei die Elektrodenvorrichtung (10) Folgendes einschließt:
eine erste Elektrode (11);
eine rohrförmige zweite Elektrode (12), die so angeordnet ist, dass sie die erste Elektrode (11) an einer radial äußeren Seite der ersten Elektrode (11) umgibt; und
eine rohrförmige dritte Elektrode (13), die so angeordnet ist, dass sie die zweite Elektrode (12) an einer radial äußeren Seite der zweiten Elektrode (12) umgibt, und so konfiguriert ist, dass eine Elektrolytlösung zumindest zwischen einer Außenumfangsoberfläche der ersten Elektrode (11) und einer Innenumfangsoberfläche der dritten Elektrode (13) fließt,
wobei eine Kombination aus der ersten Elektrode (11), der zweiten Elektrode (12) und der dritten Elektrode (13) eine Kombination aus einer negativen Elektrode (11a, 12b, 13c), die Metall enthält, einer positiven Aufladungselektrode (11b, 12a, 13b) und einer positiven Entladungselektrode (11c, 12c, 13a) ist,
wobei die Elektrodenvorrichtung (10) eine Form aufweist, die sich in einer axialen Richtung erstreckt, und einen ersten Endabschnitt (10a), der ein Endabschnitt in der axialen Richtung ist, und einen zweiten Endabschnitt (10b), der ein anderer Endabschnitt in der axialen Richtung ist, einschließt,
wobei die Kammer (20) einschließt:
einen ersten Kammerabschnitt (21), der so angeordnet ist, dass er im Inneren mindestens einen Endabschnitt (13d1) der dritten Elektrode (13) auf einer Seite des ersten Endabschnitts (10a) der Elektrodenvorrichtung (10) aufnimmt; und
einen zweiten Kammerabschnitt (22), der so angeordnet ist, dass er im Inneren mindestens einen weiteren Endabschnitt (13d2) der dritten Elektrode (13) auf einer Seite des zweiten Endabschnitts (10b) der Elektrodenvorrichtung (10) aufnimmt,
wobei der erste Kammerabschnitt (21) eine erste Stirnfläche (21a) und eine zweite Stirnfläche (21b) aufweist, die in axialer Richtung voneinander entfernt angeordnet sind, und die erste Stirnfläche (21a) und die zweite Stirnfläche (21b) jeweils mit einer ersten Öffnung (23a) und einer zweiten Öffnung (23b) ausgebildet sind,
wobei der zweite Kammerabschnitt (22) eine dritte Stirnfläche (22a) und eine vierte Stirnfläche (22b) aufweist, die in axialer Richtung voneinander entfernt angeordnet sind, und die dritte Stirnfläche (22a) und die vierte Stirnfläche (22b) jeweils mit einer dritten Öffnung (24a) und einer vierten Öffnung (24b) ausgebildet sind, und
wobei die erste Elektrode (11), die zweite Elektrode (12) und die dritte Elektrode (13), die die Elektrodenvorrichtung (10) ausbilden, jeweils in die zweite Öffnung (23b) und die vierte Öffnung (24b) eingesetzt sind und ein Dichtungselement (25) zum Abdichten zwischen einer Außenumfangsoberfläche der dritten Elektrode (13) und jeweiligen Innenumfangsoberflächen des ersten Kammerabschnitts (21) und des zweiten Kammerabschnitts (22) dazwischen angeordnet ist.

2. Metall-Luft-Batteriesystem (1) nach Anspruch 1,
ferner mit einer Schaltvorrichtung (7) zum Umschalten, so dass die negative Elektrode (11a, 12b, 13c) entweder mit der positiven Aufladungselektrode (11b, 12a, 13b) oder der positiven Entladungselektrode (11c, 12c, 13a) elektrisch verbunden ist,
wobei die Schaltvorrichtung (7) einschließt:
einen ersten Schalter (7c) zum elektrischen Öffnen und Schließen zwischen der positiven Entladungselektrode (11c, 12c, 13a) und der negativen Elektrode (11a, 12b, 13c); und
einen zweiten Schalter (7d) zum elektrischen Öffnen und Schließen zwischen der negativen Elektrode (11a, 12b, 13c) und der positiven Aufladungselektrode (11b, 12a, 13b).

3. Metall-Luft-Batteriesystem (1) nach Anspruch 1,
ferner mit einer Schaltvorrichtung (7) zum Umschalten, so dass die negative Elektrode (11a, 12b, 13c) entweder mit der positiven Aufladungselektrode (11b, 12a, 13b) oder der positiven Entladungselektrode (11c, 12c, 13a) elektrisch verbunden ist,
wobei die Schaltvorrichtung (7) eine erste Diode (7a) zum Fließenlassen eines Stroms in einer Richtung von der positiven Entladungslektrode (11c, 12c, 13a) zu der negativen Elektrode (11a, 12b, 13c) einschließt.

4. Metall-Luft-Batteriesystem (1) nach Anspruch 3,
wobei die Schaltvorrichtung (7) ferner eine zweite Diode (7b) zum Fließenlassen des Stroms in einer Richtung von der negativen Elektrode (11a, 12b, 13c) zu der positiven Aufladungselektrode (11b, 12a, 13b) aufweist.

5. Metall-Luft-Batteriesystem (1) nach einem der Ansprüche 1 bis 4,
wobei die dritte Elektrode (13) die positive Entladungselektrode (13a) ist.

6. Metall-Luft-Batteriesystem (1) nach einem der Ansprüche 1 bis 4,
wobei die erste Elektrode (11) die positive Entladungselektrode (11c) mit einer rohrförmigen Form ist,
wobei sowohl der erste Kammerabschnitt (21) als auch der zweite Kammerabschnitt (22) innen mit einem Trennelement (30) versehen sind, um einen Strom der Elektrolytlösung in der Kammer (20) in einen ersten Strom (F1), der innerhalb der positiven Entladungselektrode (11c) fließt, und einen zweiten Strom (F2), der außerhalb der positiven Entladungselektrode (11c) fließt, zu trennen, und
wobei das Metall-Luft-Batteriesystem (1) ferner eine Zufuhrvorrichtung (34) für sauerstoffhaltiges Gas umfasst, um der Elektrolytlösung des ersten Stroms (F1) ein sauerstoffhaltiges Gas zuzuführen.

7. Metall-Luft-Batteriesystem (1) nach einem der Ansprüche 1 bis 4,
wobei die erste Elektrode (11) die positive Entladungselektrode (11c) mit einer rohrförmigen Form ist,
wobei nur die positive Entladungselektrode (11c) der Elektrodenvorrichtung (10) in die erste Öffnung (23a) und die dritte Öffnung (24a) eingesetzt ist, und
wobei eine Zufuhrvorrichtung (37) für sauerstoffhaltiges Fluid bereitgestellt ist, um innerhalb der positiven Entladungselektrode (11c) ein sauerstoffhaltiges Fluid fließen zu lassen.

8. Metall-Luft-Batteriesystem (1) nach Anspruch 6 oder 7,
wobei die zweite Elektrode (12) die positive Aufladungselektrode (12a) ist und die dritte Elektrode (13) die negative Elektrode (13c) ist.

9. Metall-Luft-Batteriesystem (1) nach Anspruch 6 oder 7,
wobei die zweite Elektrode (12) die negative Elektrode (12b) ist und die dritte Elektrode (13) die positive Aufladungselektrode (13b) ist.

10. Metall-Luft-Batteriesystem (1) nach einem der Ansprüche 1 bis 4,
wobei die zweite Elektrode (12) die positive Entladungselektrode (12c) ist,
wobei sowohl der erste Kammerabschnitt (21) als auch der zweite Kammerabschnitt (22) innen mit einem Trennelement (30) versehen sind, um einen Strom der Elektrolytlösung in der Kammer (20) in einen ersten Strom (F1), der zwischen der positiven Aufladungselektrode (11b, 13b) und der positiven Entladungselektrode (12c) fließt, und einen zweiten Strom (F2), der zwischen der positiven Entladungselektrode (12c) und der negativen Elektrode (11a, 13c) fließt, zu trennen, und
wobei das Metall-Luft-Batteriesystem (1) ferner eine Zufuhrvorrichtung (34) für sauerstoffhaltiges Gas umfasst, um der Elektrolytlösung des ersten Stroms (F1) ein sauerstoffhaltiges Gas zuzuführen.

11. Metall-Luft-Batteriesystem (1) nach Anspruch 10,
wobei die erste Elektrode (11) die positive Aufladungselektrode (11b) ist und die dritte Elektrode (13) die negative Elektrode (13c) ist.

12. Metall-Luft-Batteriesystem (1) nach Anspruch 10,
wobei die erste Elektrode (11) die negative Elektrode (11a) ist und die dritte Elektrode (13) die positive Aufladungselektrode (13b) ist.

13. Metall-Luft-Batteriesystem (1) nach einem der Ansprüche 1 bis 12,
wobei die positive Entladungselektrode (11c, 12c, 13a) eine Trennmembran (26) auf einer Oberfläche einschließt, die der negativen Elektrode (11a, 12b, 13c) zugewandt ist.

## Revendications

1. Système de batterie métal-air (1), comprenant un élément (2) comportant :
une chambre (20) ; et
un dispositif d'électrode (10) logé dans la chambre (20),
dans lequel le dispositif d'électrode (10) comprend :
- une première électrode (11) ;
une deuxième électrode tubulaire (12) disposée de manière à entourer la première électrode (11) sur un côté radialement extérieur de la première électrode (11) ; et
une troisième électrode tubulaire (13) disposée de manière à entourer la deuxième électrode (12) sur un côté radialement extérieur de la deuxième électrode (12), et configurée de manière à ce qu'une solution électrolytique s'écoule au moins entre une surface périphérique extérieure de la première électrode (11) et une surface périphérique intérieure de la troisième électrode (13),
dans lequel une combinaison de la première électrode (11), de la deuxième électrode (12) et de la troisième électrode (13) est une combinaison d'une électrode négative (11a, 12b, 13c) contenant du métal, d'une électrode positive de charge (11b, 12a, 13b) et d'une électrode positive de décharge (11c, 12c, 13a),
dans lequel le dispositif d'électrode (10) a une forme s'étendant dans une direction axiale et comprend une première partie d'extrémité (10a) qui est une partie d'extrémité dans la direction axiale et une seconde partie d'extrémité (10b) qui est une autre partie d'extrémité dans la direction axiale,
dans lequel la chambre (20) comporte :
une première section de chambre (21) disposée de manière à loger intérieurement au moins une partie d'extrémité (13d1) de la troisième électrode (13) sur un côté de la première partie d'extrémité (10a) du dispositif d'électrode (10) ; et
une seconde section de chambre (22) disposée de manière à loger intérieurement au moins une autre partie d'extrémité (13d2) de la troisième électrode (13) sur un côté de la seconde partie d'extrémité (10b) du dispositif d'électrode (10),
dans lequel la première section de la chambre (21) présente une première face d'extrémité (21a) et une deuxième face d'extrémité (21b) situées éloignées l'une de l'autre dans la direction axiale, et la première face d'extrémité (21a) et la deuxième face d'extrémité (21b) sont respectivement formées avec une première ouverture (23a) et une deuxième ouverture (23b),
dans lequel la seconde section de la chambre (22) présente une troisième face d'extrémité (22a) et une quatrième face d'extrémité (22b) situées éloignées l'une de l'autre dans la direction axiale, et la troisième face d'extrémité (22a) et la quatrième face d'extrémité (22b) sont respectivement formées d'une troisième ouverture (24a) et d'une quatrième ouverture (24b), et
dans lequel la première électrode (11), la deuxième électrode (12) et la troisième électrode (13) formant le dispositif d'électrode (10) sont respectivement insérées dans la deuxième ouverture (23b) et la quatrième ouverture (24b), et un élément d'étanchéité (25) destiné à assurer l'étanchéité entre une surface périphérique extérieure de la troisième électrode (13) et des surfaces périphériques intérieures respectives de la première section de chambre (21) et de la seconde section de chambre (22) est disposé entre les deux.

2. Système de batterie métal-air (1) selon la revendication 1,
comprenant en outre un dispositif de commutation (7) pour commuter de manière que l'électrode négative (11a, 12b, 13c) soit connectée électriquement soit à l'électrode positive de charge (11b, 12a, 13b), soit à l'électrode positive de décharge (11c, 12c, 13a),
dans lequel le dispositif de commutation (7) comporte :
un premier interrupteur (7c) pour ouvrir et fermer électriquement entre l'électrode positive de décharge (11c, 12c, 13a) et l'électrode négative (11a, 12b, 13c) ; et
un second interrupteur (7d) pour ouvrir et fermer électriquement entre l'électrode négative (11a, 12b, 13c) et l'électrode positive de charge (11b, 12a, 13b).

3. Système de batterie métal-air (1) selon la revendication 1,
comprenant en outre un dispositif de commutation (7) pour commuter de manière que l'électrode négative (11a, 12b, 13c) soit connectée électriquement soit à l'électrode positive de charge (11b, 12a, 13b), soit à l'électrode positive de décharge (11c, 12c, 13a),
dans lequel le dispositif de commutation (7) comporte une première diode (7a) pour faire circuler un courant dans une direction de l'électrode positive de décharge (11c, 12c, 13a) vers l'électrode négative (11a, 12b, 13c).

4. Système de batterie métal-air (1) selon la revendication 3,
dans lequel le dispositif de commutation (7) comporte en outre une seconde diode (7b) pour faire circuler le courant dans une direction de l'électrode négative (11a, 12b, 13c) vers l'électrode positive de charge (11b, 12a, 13b).

5. Système de batterie métal-air (1) selon l'une quelconque des revendications 1 à 4,
dans lequel la troisième électrode (13) est l'électrode positive de décharge (13a).

6. Système de batterie métal-air (1) selon l'une quelconque des revendications 1 à 4,
dans lequel la première électrode (11) est l'électrode positive de décharge (11c) présentant une forme tubulaire,
dans lequel chacune parmi la première section de chambre (21) et la seconde section de chambre (22) est équipée intérieurement d'un élément de séparation (30) pour séparer un flux de la solution électrolytique dans la chambre (20) en un premier flux (F1) s'écoulant à l'intérieur de l'électrode positive de décharge (11c) et un second flux (F2) s'écoulant à l'extérieur de l'électrode positive de décharge (11c), et
dans lequel le système de batterie métal-air (1) comprend en outre un dispositif d'alimentation en gaz contenant de l'oxygène (34) pour fournir un gaz contenant de l'oxygène à la solution d'électrolyte du premier flux (F1).

7. Système de batterie métal-air (1) selon l'une quelconque des revendications 1 à 4,
dans lequel la première électrode (11) est l'électrode positive de décharge (11c) présentant une forme tubulaire,
dans lequel seule l'électrode positive de décharge (11c) du dispositif d'électrode (10) est insérée dans la première ouverture (23a) et la troisième ouverture (24a), et
dans lequel un dispositif d'alimentation en fluide contenant de l'oxygène (37) est prévu pour faire circuler, à l'intérieur de l'électrode positive de décharge (11c), un fluide contenant de l'oxygène.

8. Système de batterie métal-air (1) selon la revendication 6 ou 7,
dans lequel la deuxième électrode (12) est l'électrode positive de charge (12a), et la troisième électrode (13) est l'électrode négative (13c).

9. Système de batterie métal-air (1) selon la revendication 6 ou 7,
dans lequel la deuxième électrode (12) est l'électrode négative (12b), et la troisième électrode (13) est l'électrode positive de charge (13b).

10. Système de batterie métal-air (1) selon l'une quelconque des revendications 1 à 4,
dans lequel la deuxième électrode (12) est l'électrode positive de décharge (12c),
dans lequel chacune parmi la première section de chambre (21) et la deuxième section de chambre (22) est équipée intérieurement d'un élément de séparation (30) pour séparer un flux de la solution électrolytique dans la chambre (20) en un premier flux (F1) s'écoulant entre l'électrode positive de charge (11b, 13b) et l'électrode positive de décharge (12c), et un second flux (F2) s'écoulant entre l'électrode positive de décharge (12c) et l'électrode négative (11a, 13c), et
dans lequel le système de batterie métal-air (1) comprend en outre un dispositif d'alimentation en gaz contenant de l'oxygène (34) pour fournir un gaz contenant de l'oxygène à la solution d'électrolyte du premier flux (F1).

11. Système de batterie métal-air (1) selon la revendication 10,
dans lequel la première électrode (11) est l'électrode positive de charge (11b), et la troisième électrode (13) est l'électrode négative (13c).

12. Système de batterie métal-air (1) selon la revendication 10,
dans lequel la première électrode (11) est l'électrode négative (11a), et la troisième électrode (13) est l'électrode positive de charge (13b).

13. Système de batterie métal-air (1) selon l'une quelconque des revendications 1 à 12,
dans lequel l'électrode positive de décharge (11c, 12c, 13a) comprend une membrane de séparation (26) sur une surface faisant face à l'électrode négative (11a, 12b, 13c).
